# EUROPEAN PATENT SPECIFICATION

(11) **EP 2 547 136 B1**
(45) Date of publication and mention of the grant of the patent: **14.09.2016**
(21) Application number: 10847296.0
(22) Date of filing: 02.12.2010
(51) Int. Cl.: H04W 28/04, H04W 16/08

(54) **Processing data in network systems to reduce burden on core network and interference**
Verarbeitung von Daten in Netzwerksystemen zur Reduzierung der Belastung auf Kernnetz und der Interferenz
Traitement de données dans des systèmes de réseaux, afin de réduire la charge sur le réseau noyau et l'interférence

(30) Priority: 12.03.2010 CN 201010123085
(43) Date of publication of application: 16.01.2013
(73) Proprietor: Huawei Technologies Co., Ltd., Longgang District Shenzhen, Guangdong 518129 (CN)
(72) Inventor: LIU, Sheng, Shenzhen Guangdong 518129 (CN); DU, Yinggang, Shenzhen Guangdong 518129 (CN)
(74) Representative: Epping - Hermann - Fischer
(86) International application number: PCT/CN2010/079378
(87) International publication number: WO 2011/110038

(56) References cited:
- EP-A1- 1 699 194
- EP-A1- 1 916 803
- CN-A- 1 909 692
- CN-A- 101 047 420
- CN-A- 101 115 275
- CN-A- 101 154 985
- CN-A- 101 494 522
- US-A1- 2007 091 862
- US-A1- 2010 077 102
- US-B2- 7 505 431

## Description

### Technical Field

The present invention relates to the field of communication technologies, and in particular to a method for processing data in a network system, eNodeB and network system.

### Background Art

At the times of 2G (second generation communication system) communication, voice calls and short messages are communicated between mobile subscribers, and this has lower requirements on the throughput of the network. A mobile network system often uses a macro Cellular networking with relatively far distances from eNodeB and relatively low cost. However, as the development of 3G and 4G (third and fourth generation communication systems) communication technologies, data transmission becomes a new demand. Particularly, real-time video transmission increased requirement on network throughput and Spectral efficiency. Since a macro cell is large in coverage and accommodates more subscribers, the network throughput of the macro cell is limited. Especially, at an edge of the cell, since the signal-to-noise radio (SNR) is relatively low, it can merely fulfill the basic service demands, but not the demand for data transmission rate. Therefore, the network system of existing macro cell cannot fulfill the demands.

In the prior art, in view of the defects of the macro cell, the radius of the cell with network is reduced, and a networking manner of microcell is adopted. Such networking manner of microcell can effectively improve SNR of the subscribers at an edge of the cell, so as to achieve improvement of the throughput of the system and experiences of the subscribers by increasing the number of the eNodeBs. However, on the one hand, due to the increase of the number of eNodeBs, the eNodeBs transmit all the data for back-transmission to the core network, and the amount of transmission is increased sharply and the processing burden of the core network is increased heavily; and on the other hand, although SNR of the subscribers at an edge of the cell is increased, the interferences with respect to subscribers at neighboring cell and eNodeBs are also increased, causing severe mutual interference.

A Chinese patent application with publication No. CN101047420A discloses a base station system and a method for branching/combining downlink/uplink data in the base station system, wherein the downlink data (data from the base station to a mobile terminal) is branched and the branched signal is transmitted to one cell via different antennas covering the same cell, and the uplink data (data from the mobile terminal to the base station) is combined.

In a European patent application with publication No. EP1916803A1, a radio communication system, a radio access method, an Access Point (AP) and a gateway are provided. Through a Packet Data Protocol (PDP) forward function unit added in the AP, the AP may directly forward the received service traffic accessing an AS, i.e. service traffic providing a high increment value for operators, to a Packet Radio Service Gateway Support Node via a configured forwarding interface according to the service property of the service traffic. And the Packet Radio Service Gateway Support Node further forwards the service traffic and performs the service charging. The PDP forward function unit may have two forwarding interfaces, one connects to the Packet Radio Service Gateway Support Node and the other connects to the Internet. The PDP forward function unit forwards the received Internet service traffic to the Packet Radio Service Gateway Support Node or directly forwards to the Internet. In addition, Circuit Switched (CS) service traffic is encapsulated, and the encapsulated CS service traffic is forwarded to the CS domain.

Regarding interference eliminating, a Chinese patent application with publication No. CN101494522A discloses a method for eliminating wireless signal interference based on network coding and a system thereof, wherein a interference eliminating arithmetic based on network coding is employed to eliminate the interference.

In addition, a method for cancel interference associated with received radio frequency (RF) burst(s), the method using blind interference cancellation (BID), is described in EP 1699194 A1.

### Summary of the Invention

One object of the present invention is to reduce the amount of transmission to the core network and reduce the processing burden of the core network more effectively relatively.

The embodiments of the present invention provide a method for processing data in a network system, eNodeB and network system, capable of effectively solving the problems of increase of processing burden of a core network and interference aggravation due to the decrease of the radius of the cell.

A method for processing data in a network system comprises:
receiving data from a terminal or a relay station and using interference alignment or partially distributed space-time coding or network encoding technologies to coordinate and suppress interference of the data;
identifying the characteristics of the data and classifying the data into data to be transmitted back to a core network and data to be bypassed, the characteristics comprising any one of quality requirement, service level and secrecy requirement; and
transmitting the classified data to the core network or bypassing the classified data according to the classifications of the data.

By using the above technical solution, the method for processing data in a network system provided in the embodiments of the present invention utilizes data bypassing to effectively reduce the amount of data transmitted back to the core network, thereby mitigating the processing burden of the core network and reducing the cost of operation, and the use of interference alignment technologies or the like to coordinate and suppress interference of the data can effectively solve the problem of interference aggravation.

The method for processin data in a network system may further comprise:
receiving second data from the Internet, from a core network or from a local router;
performing data combining on the received second data when the data are in two or more paths; and
transmitting the second data to the terminal or the relay station after data combining, and using interference alignment or partially distributed space-time coding or network encoding technologies to coordinate and suppress interference of the second data.

By using the above technical solution, the method for processing data in a network system provided in the embodiments of the present invention utilizes data combining in conjunction with data bypassing to effectively reduce the amount of data transmitted back to the core network, thereby mitigating the processing burden of the core network and reducing the cost of operation, and the use of interference alignment technologies or the like to coordinate and suppress interference of the data can effectively solve the problem of interference aggravation.

An eNodeB comprises:
a receiving unit, an interference processing unit and a bypassing unit;
wherein the receiving unit is configured to receive data from a terminal or a relay station;
the interference processing unit is configured to use interference alignment or partially distributed space-time coding or network encoding technologies to coordinate and suppress interference of the data; and
the bypassing unit (2) is configured to identify the characteristics of the data, classify the data into data to be transmitted back to a core network and the data to be bypassed, and transmit the classified data to the core network or bypass the classified data according to the classifications of the data by the base station, wherein the characteristics comprising quality requirement, service level or secrecy requirement.

By using the above technical solution, the eNodeB provided in the embodiments of the present invention can perform data bypassing, reduce the amount of data transmitted back to the core network, thereby mitigating the processing burden of the core network and reducing the cost of operation. And it is possible to coordinate and suppress interference of the data and effectively solve the problem of interference aggravation.

The eNodeB may further comprise:
a second receiving unit, a combining unit and a second interference processing unit;
wherein the second receiving unit is configured to receive second data from the Internet or from a core network or from a local router;
the combining unit is configured to perform data combining on the received second data when the data are in two or more paths, and transmit the data to the terminal or the relay station after data combining; and
the second interference processing unit is configured to use interference alignment or partially
distributed space-time coding or network encoding technologies to coordinate and suppress interference of the second data.

By using the above technical solution, the eNodeB provided in the embodiments of the present invention can perform data combining in conjunction with data bypassing, effectively reduce the amount of data transmitted back to the core network, thereby mitigating the processing burden of the core network and reducing the cost of operation. And it is possible to coordinate and suppress interference of the data and effectively solve the problem of interference aggravation.

A network system comprises:
an eNodeB and a relay station;
wherein the eNodeB is configured to receive data from a terminal and a relay station, use interference alignment or partially distributed space-time coding or network encoding technologies to coordinate and suppress interference of the data, identify the characteristics of the data and classify the data into data to be transmitted back to a core network and the data to be bypassed, and transmit the classified data to the core network or bypass the classified data according to the classifications of the data by the base station, wherein the characteristics comprise quality requirement, service level or secrecy requirement.

By using the above technical solution, the network system provided in the embodiments of the present invention can perform data bypassing, reduce the amount of data transmitted back to the core network, thereby mitigating the processing burden of the core network and reducing the cost of operation, and it is possible to coordinate and suppress interference of the data and effectively solve the problem of interference aggravation.

### Brief Description of the Drawings

Figure 1 is a flowchart of the method for processing data in a network system provided in the embodiments of the present invention;
Figure 2 is a detailed flowchart of the method for processing data in a network system provided in the embodiments of the present invention;
Figure 3 is a flowchart of the method for processing data in another type of network system provided in the embodiments of the present invention;
Figure 4 is a detailed flowchart of the method for processing data in another type of network system provided in the embodiments of the present invention;
Figure 5 is a structural block diagram of an eNodeB provided in the embodiments of the present invention;
Figure 6 is a schematic diagram of the principle of a bypassing unit of the eNodeB shown in Fig. 5;
Figure 7 is a structural block diagram of another eNodeB provided in the embodiments of the present invention;
Figure 8 is a schematic diagram of the principle of a combining unit of the eNodeB shown in Fig. 7;
Figure 9 is a structural block diagram of a network system provided in the embodiments of the present invention; and
Figure 10 is a schematic diagram of the application of the network system provided in the embodiments of the present invention.

### Detailed Description of the Invention

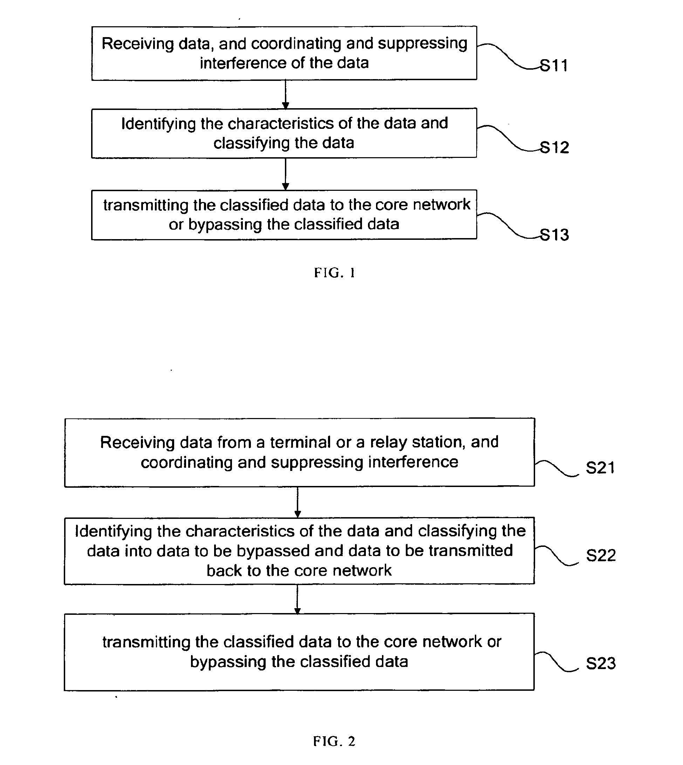

The method for processing data in a network system provided in the embodiments of the present invention as shown in the flowchart of Fig. 1 comprises the following steps:
S11: receiving data, and using interference alignment or partially distributed space-time coding or network encoding technologies to coordinate and suppress interference of the data;
S12: identifying the characteristics of the data and classifying the data; and
S 13: performing data bypassing according to the classifications of the data.

The method for processing data in a network system provided in the embodiments of the present invention utilizes data bypassing to effectively reduce the amount of data transmitted back to the core network, thereby mitigating the processing burden of the core network and reducing the cost of operation, and it is possible to effectively solve the problem of interference aggravation by coordinating and suppressing interference.

The method for processing data in a network system of this embodiment shall be described in detail below. As shown in Fig. 2, the method comprises:
S21: receiving data from a terminal or a relay station, and using interference alignment or partially distributed space-time coding or network encoding technologies to coordinate and suppress interference of the data;
in the network system, since the eNodeB is configured to receive and process the data of the subscriber of the eNodeB, in this step, data from the terminal or the relay station is received first, and in the process of receiving data by the eNodeB, there exists interference of different levels. Especially, in a network system with dense networking, interference between neighboring cells is very severe, and thus needs to be coordinated and suppressed. As in the method for processing data in a network system provided in the embodiments of the present invention, data bypassing is performed on the received data, the data of each eNodeB or transmitting point in the network system may not be shared, and only the information of control plane such as channel information or the like can be shared. Therefore, this step adopts the interference processing technologies such as interference alignment or partially distributed space-time coding or network encoding technologies, and these technologies do not require data sharing and can minimize the interference, as long as the channel information can be shared. It should be noted that the manner of coordinating and suppressing interference is not limited to those adopted in this step, and may be flexibly configured as demanded. For example, the following manners may be adopted:
   when the data cannot be shared, interference alignment or partially distributed space-time coding or network encoding technologies are used to coordinate and suppress the interference of the data; and
   when the data can be shared, jointly processing technology of multiple eNodeBs or processing technology of distributed antennas can be used to coordinate and suppress the interference of the data.
   wherein, the jointly processing technology of multiple eNodeBs or processing technology of distributed antennas is an interference processing technology requiring data sharing. Of course, interference processing technologies requiring data sharing are not limited to the above-mentioned technologies, and may be flexibly configured as demanded.

It should be note that the interference processing technologies such as interference alignment or partially distributed space-time coding or network encoding technologies or the like not requiring data sharing and capable to minimize the interference as long as the channel information can be shared usually have to operate in a relatively high SNR range to solve the problem of interference.

S22: identifying the characteristics of the data and classifying the data so that the data is classified into data to be bypassed to the Internet and data to be transmitted back to the core network, or the data is classified into data to be bypassed to the Internet, data to be transmitted back to the core network and data for local routing;
in order to reduce the amount of data transmitted back to the core network by the eNodeB, data is classified according to the characteristics of the data in this step and the specific classification of data can be as follows:
obtaining a quality requirement or service level of identifying the data, and classifying the data according to the quality requirement or service level of the data; or, obtaining a secrecy requirement of the data, and classifying the data according to the secrecy requirement of the data.

For example, when the data are classified into data to be bypassed to the Internet and data to be transmitted back to the core network in this step, the data to be bypassed to the Internet may be service data of low service quality requirement, low value-added service and low secrecy requirements, and the data to be transmitted back to the core network may be control plane data such as channel information, signaling information, and control information, etc., and service data of high service quality requirement, high value-added service and high secrecy requirements, or other service data having special requirements.

In addition, in practical use, data may be classified based on actual circumstances, and may be classified into data to be bypassed to the Internet, data to be transmitted back to the core network and data for local routing.

S23: performing data bypassing on the data according to the classifications of the data, bypassing the data to be bypassed to the Internet directly to the Internet, transmitting the data to be transmitted back to the core network back to the core network, and directly locally routing the data for local routing if the data for local routing is further included in the classified data.

When the method for processing data provided in this embodiment is applied to a network system, it can effectively solve the problems of increase of processing burden of the core network and interference aggravation due to the decrease of the radius of the cell. Because of the decrease of the radius of the cell and the increase of the number of the eNodeBs, the throughput of the network system and the SNR at the edges of the cell are outstandingly enhanced; however, the amount of data transmitted back and interferences between cells are also outstandingly increased. By means of data bypassing at the eNodeB side to bypass a part of data directly to the Internet or locally router, the amount of data transmitted back to the core network can be effectively reduced, thereby mitigating the processing burden of the core network and lowering the cost of operation. Furthermore, valuable wireless link is not required, so that the valuable wireless transmission resources can be greatly saved, and the efficiency of air interface can be effectively improved. Although data bypassing may result in the possibility that data information cannot be shared, during data processing, the present embodiment adopts technologies such as interference alignment, etc. requiring relatively high SNR range, no data sharing and capable to minimize interference as long as channel information can be shared, to coordinate and suppress interference, effectively solving the problem of interference aggravation due to the decrease of the radius of the cell.

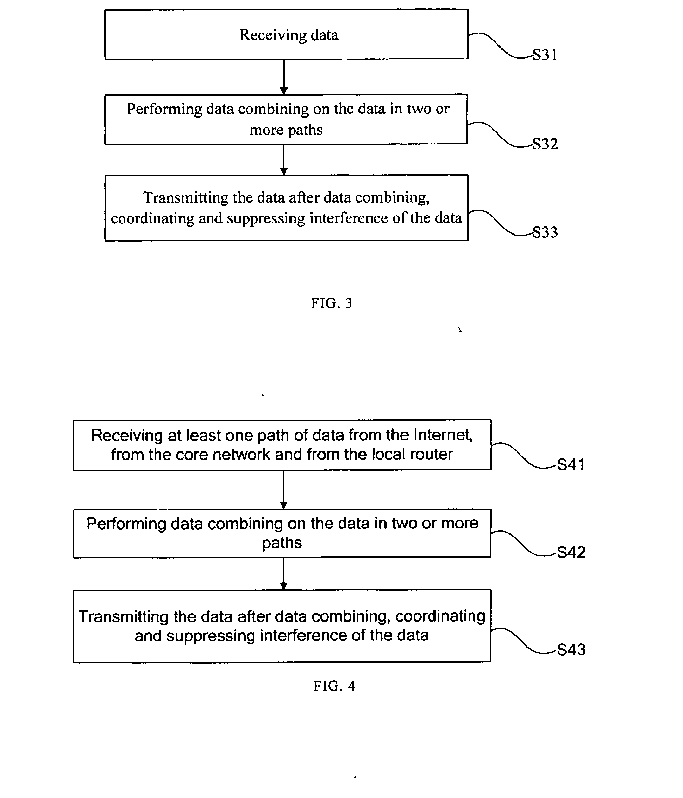

The method for processing data in a network system provided in the above embodiment of the present invention is a process of processing data transmitted by a terminal or a relay station by eNodeBs. And meanwhile, the Internet or core network or the like transmit the data back to corresponding eNodeB after performing response processing on the received data, and the corresponding eNodeB needs to receive the data transmitted by the Internet or core network, and forwards the data to the terminal or relay station after processing on the data. Accordingly, an embodiment of the present invention provides a method for processing data in another type of network system as shown in the flowchart of Fig. 3 comprising:
S31: receiving data;
S32: performing data combining on the data when the data are in two or more paths; and
S33: transmitting the data after data combining, and using interference alignment or partially distributed space-time coding or network encoding technologies to coordinate and suppress interference of the data.

The method for processing data in a network system provided in this embodiment of the present invention utilizes data combining in conjunction with the above method of data bypassing to effectively reduce the amount of data transmitted back to the core network, thereby mitigating the processing burden of the core network and reducing the cost of operation, and it is possible to effectively solve the problem of interference aggravation by coordinating and suppressing interference of the data.

The method for processing data in a network system of this embodiment shall be described in detail below. As shown in Fig. 4, the method comprises:
S41: receiving at least one path of data from the Internet, or from the core network or from the local router;
since an eNodeB bypasses the data transmitted by a terminal or a relay station and transmits the data respectively to the Internet and the core network, etc., the Internet and the core network will transmit the data back to corresponding eNodeB after performing response processing on the received data; meanwhile, the data received by the eNodeB comprise at least one path of data from the Internet, or from the core network or from the local router.
S42: performing data combining on the data when the at least one path of data are in two or more paths;
since the received data may comprise multiple paths of data, it is necessary to perform data combining on the multiple paths of data to combine the multiple paths of data into one path of data and then transmit the one path of data to the terminal or the relay station.
S43: transmitting the data after data combining, and using interference alignment or partially distributed space-time coding or network encoding technologies to coordinate and suppress interference of the data.

In the process of transmitting data after data combining to the terminal or the relay station by the eNodeB, there exists interference in different levels, and thus it is necessary to coordinate and suppress interference of the data. As the data transmitted by the eNodeBs may comprise multiple paths of data, it is possible that the data of each eNodeB or transmitting point may not be shared, and only the information of control plane such as channel information can be shared. Therefore, this step adopts interference processing technologies such as interference alignment or partially distributed space-time coding or network encoding technologies not requiring data sharing and capable to minimize the interference as long as channel information can be shared. It should be noted that the manners of coordinating and suppressing interference is not limited to that adopted in this step, and can be flexibly configured as demanded. For example, the following manners may be adopted:
when the data cannot be shared, interference alignment or partially distributed space-time coding or network encoding technologies are used to coordinate and suppress the interference of the data; and
when the data can be shared, jointly processing technology of multiple eNodeBs or processing technology of distributed antennas can be used to coordinate and suppress the interference of the data.

Wherein, the jointly processing technology of multiple eNodeBs or processing technology of distributed antennas is an interference processing technology requiring data sharing. Of course, interference processing technologies requiring data sharing are not limited to the above-mentioned technologies, and may be flexibly configured as demanded.

It should be note that the interference processing technologies such as interference alignment or partially distributed space-time coding or network encoding technologies or the like not requiring data sharing and capable to minimize the interference as long as the channel information can be shared usually have to operate in a relatively high SNR range to solve the problem of interference.

In summary, in the method for processing data provided in this embodiment, by means of data combining in conjunction with the above method of data bypassing, the amount of data transmitted back to the core network can be effectively reduced, thereby mitigating the processing burden of the core network and lowering the cost of operation. Furthermore, valuable wireless link is not required, so that the valuable wireless transmission resources can be greatly saved, and the efficiency of air interface can be effectively improved. Furthermore, the present embodiment adopts technologies such as interference alignment, or partially distributed space-time coding or network encoding technologies, etc. no data sharing and capable to minimize interference as long as channel information can be shared to coordinate and suppress interference, thereby overcoming the effect that data cannot be shared due to the data bypassing, and effectively solving the problem of interference aggravation.

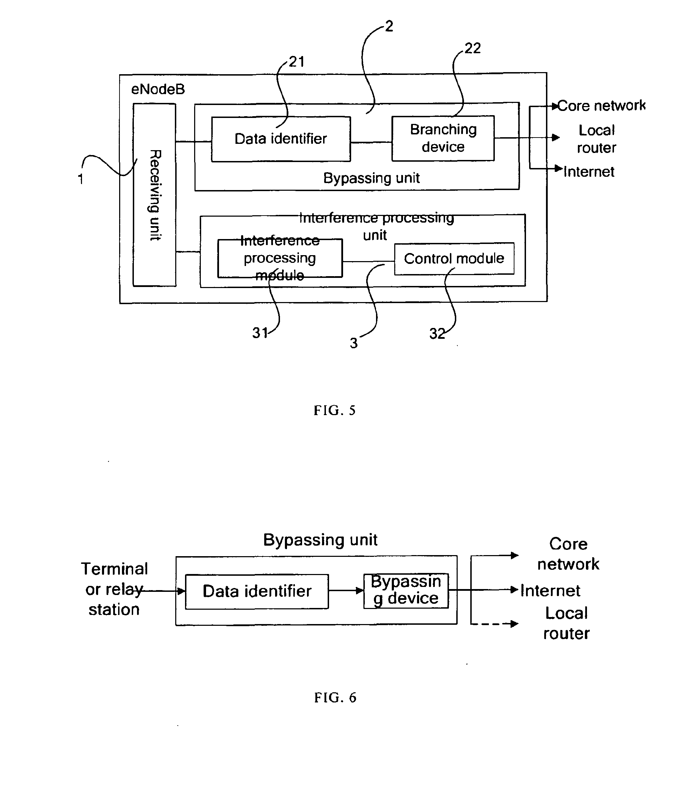

Accordingly, an embodiment of the present invention further provides an eNodeB. As shown in Fig. 5, the eNodeB comprises
a receiving unit 1, a bypassing unit 2 and an interference processing unit 3;
wherein the receiving unit 1 is configured to receive data from a terminal or a relay station; the bypassing unit 2 is configured to identify the characteristics of the data and classify the data, and perform data bypassing according to the classifications of the data; and the interference processing unit 3 is configured to use interference alignment or partially distributed space-time coding or network encoding technologies to coordinate and suppress interference of the data. The eNodeB provided in the embodiment of the present invention can effectively solve the problems of increasing processing burden of the core network and interference aggravation due to the decrease of the radius of the cell.

Furthermore, the bypassing unit 2 may comprise a data identifier 21 and a branching device 22; wherein the data identifier 21 is configured to identify the characteristics of the data and classify the data, and the branching device 22 is configured to perform data bypassing according to the characteristics of the data.

Figure 6 shows a schematic diagram of the principle of the bypassing unit 2. The bypassing unit 2 receives data transmitted by the terminal and the relay station. The received data first pass through the data identifier 21, and the data identifier 21 obtains quality requirement or service level of the data according to the characteristic of the data, and classifies the data according to the quality requirement or service level of the data, or obtains a secrecy requirement of the data, and classifies the data according to the secrecy requirement of the data. The data can be classified into data to be bypassed to the Internet and data to be transmitted back to the core network, and according to the actual circumstance, the data can be further classified into the data for local routing. Wherein, the data to be bypassed to the Internet may be service data of low service quality requirement, low value-added service or low secrecy requirements, and the data to be transmitted back to the core network may be control plane data such as channel information, signaling information, or control information, etc., and service data of high service quality requirement, high value-added service and high secrecy requirements, or other service data having special requirements. Then the branching device 22 bypasses the data to be bypassed to the Internet directly to the Internet, and transmits the data to be back-transmitted to the core network back to the core network, and directly locally routing the data for local routing if the data for local routing is further included in the classified data. In this way, the eNodeB provided in this embodiment can transmit large amount of data directly to the Internet or perform directly locally routing thereon, thereby effectively mitigating the burden of back-transmitting greatly, and lowering the load of the core network. And, valuable wireless link is not required, and thus the valuable wireless transmission resources can be greatly saved, and the efficiency of air interface can be effectively improved. It should be noted that the manner of data bypassing by the bypassing unit 2 is not limited to that mentioned above, and may be set as actually required.

Furthermore, the interference processing unit 3 may comprise an interference processing module 31 and a control module 32; wherein
the interference processing module 31 is configured to coordinate and suppress the interference of the data; and
the control module 32 is configured to instruct the interference processing module 31 to use interference alignment or partially distributed space-time coding or network encoding technologies to coordinate and suppress interference of the data, or
instruct the interference processing module 31 to use interference alignment or partially distributed space-time coding or network encoding technologies to coordinate and suppress interference of the data when the data cannot be shared, and to use jointly processing technology of multiple eNodeBs or processing technology of distributed antennas to coordinate and suppress the interference of the data when the data can be shared.

During data processing, a large quantity of data is bypassed to the Internet by the bypassing unit 2, and it is possible that the data transmitted between each eNodeB and terminal cannot be shared and only information of control plane such as channel information or the like can be shared. Therefore, the interference processing unit 3 uses interference alignment or partially distributed space-time coding or network encoding technologies or the like not requiring data sharing to coordinate and suppress interference of the data. It should be noted that interference processing technologies such as interference alignment or the like not requiring data sharing and capable to minimize the interference as long as channel information can be shared usually have to operate in a relatively high SNR range to solve the problem of interference. Thus, a relatively high SNR range should be ensured for the use of technologies of interference alignment, etc.

With the control to the interference processing module 31 by the control module 32, the eNodeB provided in this embodiment may flexibly control the interference according to the actual conditions and preset setting, so that the interference processing module 31 uses interference alignment or partially distributed space-time coding or network encoding technologies to coordinate and suppress the interference of the data, or the interference processing module 31 uses interference alignment or partially distributed space-time coding or network encoding technologies to coordinate and suppress the interference of the data when the data cannot be shared, and uses jointly processing technology of multiple eNodeBs or processing technology of distributed antennas to coordinate and suppress the interference of the data when the data can be shared.

Furthermore, the eNodeB provided in this embodiment further comprises accelerating devices such as a "Cache", so that the speed of transmission can be ensured in processing video services, etc.

In summary, the eNodeB provided in this embodiment can perform data bypassing and bypass the data, which is supposed to be all transmitted back to the core network, so that a part of the data is directly bypassed to the Internet of local router, while it is possible to coordinate and suppress the interference of the data in the case of data bypass. Therefore, it is possible to effectively solve the problem of increase of the processing burden of the core network and interference aggravation due to the decrease of the radius of cell. When the eNodeB provided in the present embodiment is applied to a densely networked network system with smaller radius of cell, because of the decrease of the radius of the cell and the increase of the number of the eNodeBs, the throughput of the network system and SNR at the edges of the cell are outstandingly enhanced; however, the amount of data transmitted back and interferences between cells are also outstandingly increased. By means of data bypassing at the eNodeB to bypass part of data directly to the Internet or the local router, the amount of data transmitted back to the core network can be effectively greatly reduced, thereby mitigating the processing burden of the core network and lowering the cost of operation. Furthermore, valuable wireless link is not required, so that the valuable wireless transmission resources can be greatly saved, and the efficiency of air interface can be effectively improved. Although data bypassing may result in the possibility that data information cannot be shared, during data processing, the eNodeB adopts technologies such as interference alignment, etc. requiring relatively high SNR range, no data sharing and capable to minimize interference as long as channel information can be shared to coordinate and suppress interference, effectively solving the problem of interference aggravation due to the decrease of the radius of the cell.

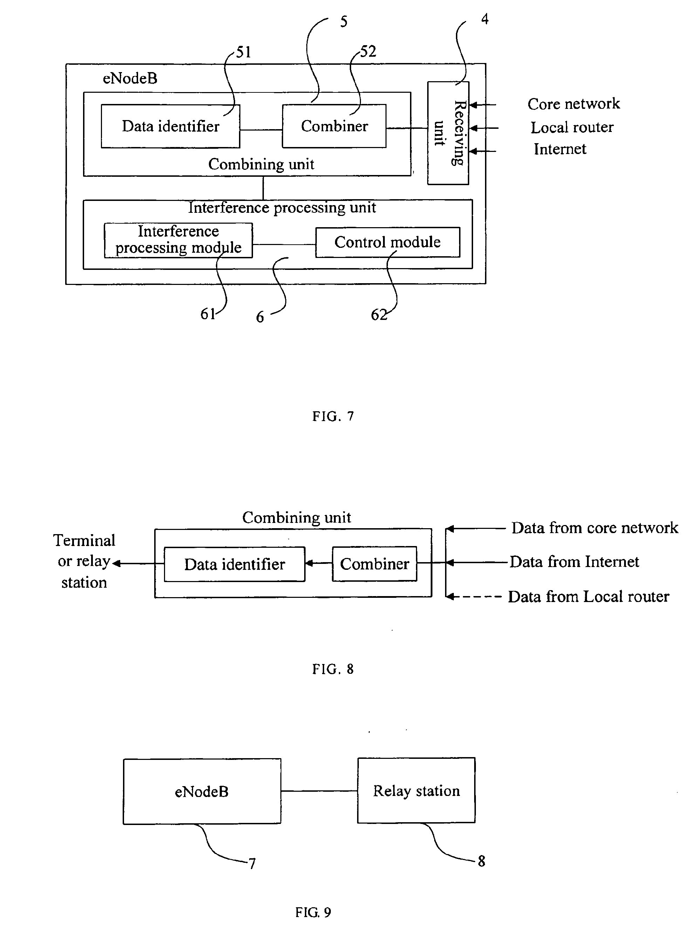

Accordingly, an embodiment of the present invention further provides an eNodeB. As shown in Fig. 7, the eNodeB comprises a receiving unit 4, a combining unit 5 and an interference processing unit 6; wherein the receiving unit 4 is configured to receive data from the Internet or from a core network or from a local router; the combining unit 5 is configured to perform data combining on the data when the data are in two or more paths, and transmit the data after data combining; and the interference processing unit 6 is configured to use interference alignment or partially distributed space-time coding or network encoding technologies to coordinate and suppress interference of the data. The eNodeB provided in this embodiment of the present invention can effectively solve the problems of increase of processing burden of the core network and interference aggravation due to the decrease of the radius of the cell.

Furthermore, the combining unit 5 may comprise a data identifier 51 and a combiner 52. Fig. 8 shows a schematic diagram of the principle of the combining unit 5, wherein the data identifier 51 is configured to identify the source of the at least one path of data, identifying whether the data are data from the core network or data from the Internet or data of the local router, and providing indication for the interference control to subsequent transmission data; and the combiner 52 is configured to perform data combining on the data when the data are in two or more paths. Wherein the combined multiple paths of data may comprise data from the core network, data from the Internet, and may further comprise data from the local router, and the combiner 52 combines these multiple paths of data into one path of data.

Furthermore, the interference processing unit 6 may adopt the same functional structure as the above-mentioned interference processing unit 3, and comprise an interference processing module 61 and a control module 62; wherein,
the interference processing module 61 is configured to coordinate and suppress the interference of the data; and
the control module 62 is configured to instruct the interference processing module 61 to use interference alignment or partially distributed space-time coding or network encoding technologies to coordinate and suppress interference of the data, or instruct the interference processing module 61 to use interference alignment or partially distributed space-time coding or network encoding technologies to coordinate and suppress interference of the data when the data cannot be shared, and to use jointly processing technology of multiple eNodeBs or processing technology of distributed antennas to coordinate and suppress the interference of the data when the data can be shared.

During data processing, in addition to the data transmitted by the core network, the data transmitted by each eNodeB and terminal or the relay station may comprise the data from the Internet or data of the local router, and it is possible that the data transmitted between each eNodeB and terminal or the relay station cannot be shared, and only information of control plane such as channel information can be shared. Therefore, the interference processing unit 6 uses interference alignment or partially distributed space-time coding or network encoding technologies or the like not requiring data sharing to coordinate and suppress interference of the data. It should be noted that interference processing technologies such as interference alignment, etc. not requiring data sharing and capable to minimize interference as long as channel information need to be shared usually have to operate in a relatively high SNR range to solve the problem of interference. Thus, a relatively high SNR range should be ensured for the use of technologies of interference alignment, etc.

With the control to the interference processing module 61 by the control module 62, the eNodeB provided in this embodiment may flexibly control the interference according to the actual conditions and preset setting, so that the interference processing module 61 uses interference alignment or partially distributed space-time coding or network encoding technologies to coordinate and suppress the interference of the data, or the interference processing module 61 uses interference alignment or partially distributed space-time coding or network encoding technologies to coordinate and suppress the interference of the data when the data cannot be shared, and uses jointly processing technology of multiple eNodeBs or processing technology of distributed antennas to coordinate and suppress the interference of the data when the data can be shared. Meanwhile, the indicating of the source of the data by the data identifier 51 provides indication for the interference control, when the data identifier 51 identifies that the data to be transmitted is all from the core network, the data can be shared, and when the data identifier 51 identifies that the data to be transmitted comprises data from the Internet or data of a local router, the data cannot be shared.

Furthermore, the eNodeB provided in this embodiment further comprises accelerating devices such as a "Cache", so that the speed of transmission can be ensured in processing video services, etc.

Furthermore, an embodiment of the present invention provides a network system. As shown in Fig. 9, the network system comprises an eNodeB 7 and a relay station 8; wherein the eNodeB 7 is configured to receive data from a terminal and the relay station 8, use interference alignment or partially distributed space-time coding or network encoding technologies to coordinate and suppress interference of the data, identify the characteristics of the data and classify the data, and perform data bypassing according to the classifications of the data. The network system provided in this embodiment of the present invention can solve the problems of increasing processing burden of the core network and interference aggravation due to the decrease of the radius of the cell.

Furthermore, in the network system, the eNodeB receives data transmitted by the terminal and/or the relay station, performs data bypassing so as to transmit the data respectively to the Internet and the core network, etc. Meanwhile, the Internet and core network, etc. transmit the data back to corresponding eNodeB after performing response processing on the received data, and the corresponding eNodeB needs to transmit the return data to the terminal or relay station after processing the data. Therefore, in order to cooperate with the data bypassing, the eNodeB is further configured to receive data comprising the data from the Internet or from the core network or from the local router, and perform data combination on the data, transmit the data after data combination to the terminal or the relay station 8, and use interference alignment or partially distributed space-time coding or network encoding technologies to coordinate and suppress interference of the data, when the data is in two or more paths.

Wherein, the eNodeB 7 may adopt the structure of the eNodeB provided in the above embodiment of the present invention, which has been explained in detail above, and would not repeat.

Furthermore, the radius of the cell of the network system is smaller than or equal to that of the cell of a microcell network system, that is, this network system is a densely networked network system. With decreased cell radius and increased number of eNodeBs, the densely networked network system can effectively increase the throughput of the network system and SNR at an edge of the cell. Moreover, it is possible to further minimize the eNodeB, reduce the transmission power of the eNodeB, achieve continuous coverage using places such as street lamps, wall corners, roofs, traffic lights, and advertisement boards, etc without the need of special machine room for placing high power-consuming facilities such as air-conditioners and enable street lamps, advertisement boards or indoor power supply systems to provide power to the eNodeB, and thereby the cost of establishment of an eNodeB and power consumption may be greatly reduced. Furthermore, with the function of bypassing of the eNodeB, sharply increased amount of back-transmitted data due to the densely networked structure may be effectively reduced, thereby mitigating the processing burden of the core network, saving air interface resources and lowering the cost of operation. And with the coordinating and suppressing of the interference, the use of interference alignment technology or the like, in conjunction with relatively high SNR range of the dense cells, can effectively solve the problem of interference aggravation due to the densely networked structure. Preferably, the radius of the cell of the densely networked network system is smaller than that of the cell of a microcell network system.

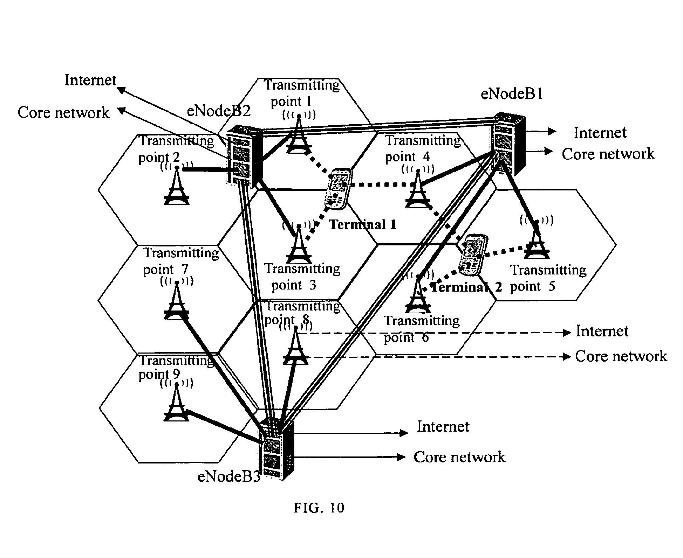

The embodiments of the network system of the present invention shall be described below in detail in conjunction with embodiments. As shown in Fig. 10, the network system in this embodiment is a densely networked network system, with the radius of the cell being less than that of the cell of a microcell network system. With respect to the macro cell network system, microcell network system and so on, the network system provided in this embodiment can be referred to as an ODC (offloading-enabled dense cell) network system. Such network system comprises eNodeBs and relay stations, each eNodeB comprising an interface leading to the Internet and the core network. It should be noted here that each of the transmitting points shown in Fig. 10 may be an independent eNodeB, or a distributed antenna of a certain eNodeB, or a relay station, or a part of a separate eNodeB. When a transmitting point is an independent eNodeB, it may comprise an interface leading to the Internet and the core network, such as the transmitting point 8 shown in Fig. 10. Each transmitting point is connected to a corresponding eNodeB, as shown by black solid lines in Fig. 10. The eNodeBs may be connected to each other for back-transmission in a wire or wireless manner, such as microwave, etc., as shown by cored solid lines in Fig. 10. The dotted lines in this figure represent the air interface transmission lines between the terminal and each transmitting point.

As shown in Fig. 10, the terminal 1 is positioned at the juncture covered by transmitting points 1, 3 and 4, and belongs to two different eNodeBs including eNodeB 2 and eNodeB 1. The terminal 2 is positioned at the juncture covered by transmitting points 4, 5 and 6, and belongs to the same eNodeB eNodeB 1. In order to reduce the overhead of back-transmission, each eNodeB performs data bypassing on the communication data between the eNodeB and each terminal, a part of data required to be transmitted back to the core network is transmitted back to the core network, and the other part of the data is directly bypassed to the Internet. The Internet and the core network forward the data to a corresponding eNodeB after processing the data. The eNodeB transmits the data to an terminal user via transmitting point after combining the data. For the data transmission between terminals (terminal 1 and terminal 2) and eNodeBs, each eNodeB may use interference alignment technologies to realize interference control.

Of course, the coordination and control with respect to the interference may be flexibly set based on actual circumstance, and the following manner may be used: since the transmitting points to which the terminal 2 is connected belong to the same eNodeB eNodeB 1, it means that no extra overhead for back-transmission is needed for the terminal 2; and for the data transmitted between the terminal 2 and the eNodeB 1, the transmitting points 4, 5, and 6 may own all the data information and channel information, and the eNodeB may directly use interference processing technologies requiring data sharing, such as jointly processing technology of multiple eNodeBs, to control the interference; and for the terminal 1, because it belongs to different eNodeBs and only channel information is shared between each of the eNodeBs to which it belongs, the eNodeBs may use interference alignment technology to control the interference.

In the ODC network system provided in this embodiment, the performances of the system may solve the problems belonging to or brought by other performances, having natural mutually-compensating and coupling relationship, and which are mutual causes and effects, and can well match each other in operation. The ODC network system adopts the densely networked structure, significantly improves the throughput of the network system and SNR at an edge of the cell, and meets the requirements for the development of the industry and performances. However, as the decrease of the radius of the cell of the network system, the amount of the data transmitted back and the interference between cells is outstandingly increased. Meanwhile, the data bypassing performed at an eNodeB side can effectively reduce the amount of data transmitted back, thereby mitigating the processing burden of the core network, and lowering the cost of operation. Because of increase of the interference, coordination and suppression with respect to interference must be performed during data processing; however, since the function of bypassing of the eNodeBs may make the data sharing impossible, the use of the interference alignment technology not requiring data sharing and capable to minimize the interference as long as channel information can be shared can coordinate and suppress the interference, effectively solving the problem of interference aggravation due to dense networking. The interference alignment technology requires a relatively large SNR range, and the densely networked structure of the network system can exactly make the SNR range of the network system relatively large. Such ODC network structure effectively increases the throughput of the network system and SNR at an edge of the cell. Furthermore, data bypassing can be performed to reduce the amount of data transmitted back, thereby mitigating the processing burden of the core network and lowering the cost of operation. Furthermore, by coordinating and suppressing the interference the problem of interference aggravation due to the densely networked structure is effectively solved.

## Claims

1. A method for processing data in a network system, the method comprising
receiving (S11, S21) data from a terminal or a relay station and using interference alignment or partially distributed space-time coding or network encoding technologies to coordinate and suppress interference of the data;
identifying (S12, S22) the characteristics of the data and classifying the data into data to be transmitted back to a core network and data to be bypassed, the characteristics comprising any one of quality requirement, service level and secrecy requirement; and
transmitting (S13, S23) the classified data to the core network or bypassing the classified data according to the classifications of the data.

2. The method according to claim 1, wherein the data to be bypassed comprises:
data to be bypassed to Internet and data for local routing.

3. The method according to claim 1, **characterized in that**, the method further comprises:
receiving (S31, S41) second data ; from the Internet, from a core network or or from a local router ;
performing (S32, S42) data combining on the received second data when the data are in two or more paths; and
transmitting (S33, S43) the second data to the terminal or the relay station after data combining, and using interference alignment or partially distributed space-time coding or network encoding technologies to coordinate and suppress interference of the second data.

4. An eNodeB, comprising:
a receiving unit (1), an interference processing unit (3) and a bypassing unit (2);
wherein the receiving unit (1) is configured to receive data from a terminal or a relay station;
the interference processing unit (3) is configured to use interference alignment or partially distributed space-time coding or network encoding technologies to coordinate and suppress interference of the data; and
the bypassing unit (2) is configured to identify the characteristics of the data, classify the data into data to be transmitted back to a core network and the data to be bypassed, and transmit the classified data to the core network or bypass the classified data according to the classifications of the data by the base station, wherein the characteristics comprising quality requirement, service level or secrecy requirement.

5. The eNodeB according to claim 4, **characterized in that**, the data to be bypassed comprises data to be bypassed to Internet.

6. The eNodeB according to claim 4, **characterized in that**, the data to be bypassed comprises data to be bypassed to Internet and data for local routing.

7. The eNodeB according to claim 4, **characterized in that**, the eNodeB further comprises:
a second receiving unit (4) configured to receive second data from the Internet or from a core network or from a local router;
a combining unit (5) configured to perform data combining on the received second data when the data are in two or more paths, and transmit the data to the terminal or the relay station after data combining; and
a second interference processing unit (6) configured to use interference alignment or partially distributed space-time coding or network encoding technologies to coordinate and suppress interference of the second data.

8. A network system, comprising: an eNodeB (7) and a relay station (8);
the eNodeB (7) is configured to receive data from a terminal or the relay station (8), use interference alignment or partially distributed space-time coding or network encoding technologies to coordinate and suppress interference of the data, identify the characteristics of the data, classify the data into data to be transmitted back to a core network and the data to be bypassed, and transmit the classified data to the core network or bypass the classified data according to the classifications of the data by the base station, wherein the characteristics comprise quality requirement, service level or secrecy requirement.

9. The network system according to claim 8, wherein
the eNodeB (7) is further configured to receive second data from Internet or from the core network or from the local router, perform data combining on the second data when the data are in two or more paths, transmit the data to the terminal or the relay station after performing data combining, and use interference alignment or partially distributed space-time coding or network encoding technologies to coordinate and suppress interference of the second data.

10. The network system according to claim 8, wherein the radius of the cell of the network system is smaller than or equal to that of the cell of a microcell network system.

## Patentansprüche

1. Verfahren zum Verarbeiten von Daten in einem Netzwerksystem, wobei das Verfahren die folgenden Schritte aufweist:
Empfangen (S11, S21) von Daten von einem Endgerät oder einer Relaisstation und Verwenden einer Interferenzausrichtung oder teilweise verteilten Raumzeitcodierung oder von Netzwerkencodierungstechnologien, um eine Interferenz der Daten zu koordinieren und zu unterdrücken;
Identifizieren (S 12, S22) der Eigenschaften der Daten und Klassifizieren der Daten in Daten, die zurück zu einem Kernnetzwerk übertragen werden sollen, und Daten, die umgeleitet werden sollen, wobei die Eigenschaften irgendeine einer Qualitätsanforderung, einer Dienstebene und einer Geheimhaltungsanforderung aufweisen; und
Übertragen (S13, S23) der klassifizierten Daten zum Kernnetzwerk oder Umleiten der klassifizierten Daten entsprechend der Klassifikationen der Daten.

2. Verfahren nach Anspruch 1, wobei die Daten, die umgeleitet werden sollen, aufweisen:
Daten, die zum Internet umgeleitet werden sollen, und Daten zum lokalen Routing.

3. Verfahren nach Anspruch 1, **dadurch gekennzeichnet, dass** das Verfahren ferner aufweist:
Empfangen (S31, S41) von zweiten Daten aus dem Internet, von einem Kernnetzwerk oder einem lokalen Router;
Durchführen (S32, S42) einer Datenkombination an den empfangenen zweiten Daten, wenn sich die Daten auf zwei oder mehreren Pfaden befinden; und
Übertragen (S33, S43) der zweiten Daten zum Endgerät oder zur Relaisstation nach der Datenkombination und Verwenden einer Interferenzausrichtung oder einer teilweise verteilten Raumzeitcodierung oder von Netzwerkencodierungstechnologien, um eine Interferenz der zweiten Daten zu koordinieren und zu unterdrücken.

4. eNodeB, der Folgendes aufweist:
eine Empfangseinheit (1), eine Interferenzverarbeitungseinheit (3) und eine Umleitungseinheit (2);
wobei die Empfangseinheit (1) konfiguriert ist, Daten von einem Endgerät oder einer Relaisstation zu empfangen;
die Interferenzverarbeitungseinheit (3) konfiguriert ist, eine Interferenzausrichtung oder teilweise verteilte Raumzeitcodierung oder Netzwerkencodierungstechnologien zu verwenden, um eine Interferenz der Daten zu koordinieren und zu unterdrücken; und
die Umleitungseinheit (2) konfiguriert ist, die Eigenschaften der Daten zu identifizieren, die Daten in Daten, die zurück zu einem Kernnetzwerk übertragen werden sollen, und die Daten, die umgeleitet werden sollen, zu klassifizieren und die klassifizierten Daten zum Kernnetzwerk zu übertragen oder die klassifizierten Daten entsprechend der Klassifikationen der Daten durch die Basisstation umzuleiten, wobei die Eigenschaften eine Qualitätsanforderung, eine Dienstebene oder eine Geheimhaltungsanforderung aufweisen.

5. eNodeB nach Anspruch 4, **dadurch gekennzeichnet, dass** die Daten, die umgeleitet werden sollen, Daten aufweisen, die zum Internet umgeleitet werden sollen.

6. eNodeB nach Anspruch 4, **dadurch gekennzeichnet, dass** die Daten, die umgeleitet werden sollen, Daten, die zum Internet umgeleitet werden sollen, und Daten zum lokalen Routing aufweisen.

7. eNodeB nach Anspruch 4, **dadurch gekennzeichnet, dass** der eNodeB ferner aufweist:
eine zweite Empfangseinheit (4), die konfiguriert ist, zweite Daten aus dem Internet oder von einem Kernnetzwerk oder von einem lokalen Router zu empfangen;
eine Kombinationseinheit (5), die konfiguriert ist, eine Datenkombination an den empfangenen zweiten Daten durchzuführen, wenn sich die Daten auf zwei oder mehreren Pfaden befinden, und die Daten zum Endgerät oder der Relaisstation nach der Datenkombination zu übertragen; und
eine zweite Interferenzverarbeitungseinheit (6), die konfiguriert ist, eine Interferenzausrichtung oder teilweise verteilte Raumzeitcodierung oder Netzwerkencodierungstechnologien zu verwenden, um eine Interferenz der zweiten Daten zu koordinieren und zu unterdrücken.

8. Netzwerksystem, das Folgendes aufweist:
einen eNodeB (7) und eine Relaisstation (8);
wobei der eNodeB (7) konfiguriert ist, Daten von einem Endgerät oder der Relaisstation (8) zu empfangen, eine Interferenzausrichtung oder teilweise verteilte Raumzeitcodierung oder Netzwerkencodierungstechnologien zu verwenden, um eine Interferenz der Daten zu koordinieren und zu unterdrücken, die Eigenschaften der Daten zu identifizieren, die Daten in Daten, die zurück zu einem Kernnetzwerk übertragen werden sollen, und die Daten, die umgeleitet werden sollen, zu klassifizieren und die klassifizierten Daten zum Kernnetzwerk zu übertragen oder die klassifizierten Daten entsprechend der Klassifikationen der Daten durch die Basisstation umzuleiten, wobei die Eigenschaften eine Qualitätsanforderung, eine Dienstebene oder eine Geheimhaltungsanforderung aufweisen.

9. Netzwerksystem nach Anspruch 8, wobei
der eNodeB (7) ferner konfiguriert ist, zweite Daten aus dem Internet oder vom Kernnetzwerk oder vom lokalen Router zu empfangen, eine Datenkombination an den zweiten Daten durchzuführen, wenn sich die Daten auf zwei oder mehreren Pfaden befinden, die Daten zum Endgerät oder zur Relaisstation nach dem Durchführen der Datenkombination zu übertragen, und eine Interferenzausrichtung oder teilweise verteilte Raumzeitcodierung oder Netzwerkencodierungstechnologien zu verwenden, um eine Interferenz der zweiten Daten zu koordinieren und zu unterdrücken.

10. Netzwerksystem nach Anspruch 8, wobei der Radius der Zelle des Netzwerksystems kleiner oder gleich dem der Zelle eines Mikrozellen-Netzwerksystems ist.

## Revendications

1. Procédé permettant de traiter des données dans un système de réseau, le procédé comprenant les étapes suivantes :
recevoir (S11, S21) des données à partir d'un terminal ou d'une station relais et utiliser des technologies d'alignement d'interférences ou de codage espace/temps partiellement distribué ou de codage réseau pour coordonner et supprimer les interférences des données ;
identifier (S 12, S22) les caractéristiques des données et classifier les données en données à retransmettre à un réseau d'infrastructure et en données à outrepasser, les caractéristiques comportant un élément quelconque parmi une exigence de qualité, un niveau de service et une exigence de confidentialité ; et
transmettre (S13, S23) les données classifiées au réseau d'infrastructure ou outrepasser les données classifiées selon les classifications des données.

2. Procédé selon la revendication 1, dans lequel les données à outrepasser comprennent :
des données à dériver vers Internet et des données destinées à un routage local.

3. Procédé selon la revendication 1, **caractérisé en ce que** le procédé comprend en outre les étapes suivantes :
recevoir (S31, S41) des deuxièmes données à partir d'Internet, à partir d'un réseau d'infrastructure ou à partir d'un routeur local ;
exécuter (S32, S42) une combinaison de données sur les deuxièmes données reçues lorsque les données sont dans deux chemins ou plus ; et
transmettre (S33, S43) les deuxièmes données au terminal ou à la station relais après une combinaison de données, et utiliser des technologies d'alignement d'interférences ou de codage espace/temps partiellement distribué ou de codage réseau pour coordonner et supprimer les interférences des deuxièmes données.

4. EnoeudB, comprenant :
une unité de réception (1), une unité de traitement d'interférences (3) et une unité d'outrepassement (2) ;
l'unité de réception (1) étant configurée pour recevoir des données à partir d'un terminal ou d'une station relais ;
l'unité de traitement d'interférences (3) étant configurée pour utiliser des technologies d'alignement d'interférences ou de codage espace/temps partiellement distribué ou de codage réseau pour coordonner et supprimer les interférences des données ; et
l'unité d'outrepassement (2) étant configurée pour identifier les caractéristiques des données, classifier les données en données à retransmettre à un réseau d'infrastructure et en données à outrepasser, et transmettre les données classifiées au réseau d'infrastructure ou outrepasser les données classifiées selon les classifications des données par la station de base, les caractéristiques comportant une exigence de qualité, un niveau de service ou une exigence de confidentialité.

5. ENoeudB selon la revendication 4, **caractérisé en ce que** les données à outrepasser comprennent des données à dériver vers Internet.

6. ENoeudB selon la revendication 4, **caractérisé en ce que** les données à outrepasser comprennent des données à dériver vers Internet et des données destinées à un routage local.

7. ENoeudB selon la revendication 4, **caractérisé en ce que** l'eNoeudB comprend en outre :
une deuxième unité de réception (4) configurée pour recevoir des deuxièmes données à partir d'Internet ou à partir d'un réseau d'infrastructure ou à partir d'un routeur local ;
une unité de combinaison (5) configurée pour exécuter une combinaison de données sur les deuxièmes données reçues lorsque les données sont dans deux chemins ou plus, et transmettre les données au terminal ou à la station relais après une combinaison de données ; et
une deuxième unité de traitement d'interférences (6) configurée pour utiliser des technologies d'alignement d'interférences ou de codage espace/temps partiellement distribué ou de codage réseau pour coordonner et supprimer les interférences des deuxièmes données.

8. Système de réseau, comprenant : un eNoeudB (7) et une station relais (8) ;
l'eNoeudB (7) est configuré pour recevoir des données à partir d'un terminal ou de la station relais (8), utiliser des technologies d'alignement d'interférences ou de codage espace/temps partiellement distribué ou de codage réseau pour coordonner et supprimer les interférences des données, identifier les caractéristiques des données, classifier les données en données à retransmettre à un réseau d'infrastructure et en données à outrepasser, et transmettre les données classifiées au réseau d'infrastructure ou outrepasser les données classifiées selon les classifications des données par la station de base, les caractéristiques comportant une exigence de qualité, un niveau de service ou une exigence de confidentialité.

9. Système de réseau selon la revendication 8, dans lequel :
l'eNoeudB (7) est en outre configuré pour recevoir des deuxièmes données à partir d'Internet ou à partir du réseau d'infrastructure ou à partir du routeur local, exécuter une combinaison de données sur les deuxièmes données lorsque les données sont dans deux chemins ou plus, transmettre les données au terminal ou à la station relais après avoir exécuté une combinaison de données, et utiliser des technologies d'alignement d'interférences ou de codage espace/temps partiellement distribué ou
de codage réseau pour coordonner et supprimer les interférences des deuxièmes données.

10. Système de réseau selon la revendication 8, dans lequel le rayon de la cellule du système de réseau est inférieur ou égal à celui de la cellule d'un système de réseau microcellulaire.
